(19) Europäisches Patentamt
European Patent Office
Office européen des brevets

(11) **EP 3 671 268 A1**

(12) **DEMANDE DE BREVET EUROPEEN**

(43) Date de publication:
**24.06.2020 Bulletin 2020/26**

(21) Numéro de dépôt: **19216584.3**

(22) Date de dépôt: **16.12.2019**

(51) Int Cl.:
*G01S 13/60* (2006.01)     *G01S 15/60* (2006.01)
*G01S 7/288* (2006.01)     *G01S 7/292* (2006.01)
*G01S 7/35* (2006.01)      *G01S 7/527* (2006.01)
*G01S 7/536* (2006.01)     *G01S 13/10* (2006.01)
*G01S 13/34* (2006.01)     *G01S 13/58* (2006.01)
*G01S 15/10* (2006.01)     *G01S 15/34* (2006.01)
*G01S 15/58* (2006.01)     *G01S 13/92* (2006.01)
*G01S 15/88* (2006.01)     *G01S 13/931* (2020.01)

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **20.12.2018 FR 1873484**

(71) Demandeur: **Commissariat à l'Energie Atomique
et aux Energies
Alternatives
75015 Paris (FR)**

(72) Inventeurs:
• **BARRA, Jérémy
38054 Grenoble (FR)**
• **DEBICKI, Olivier
38054 Grenoble (FR)**
• **LESECQ, Suzanne
38054 Grenoble (FR)**
• **MAREAU, Nicolas
38054 Grenoble (FR)**
• **OUVRY, Laurent
38054 Grenoble (FR)**
• **ZARUDNIEV, Mykhailo
38054 Grenoble (FR)**

(74) Mandataire: **Priori, Enrico et al
Marks & Clerk France
Immeuble "Visium"
22, avenue Aristide Briand
94117 Arcueil Cedex (FR)**

(54) **PROCEDE ET SYSTEME DE MESURE DE LA VITESSE D'UN PORTEUR PAR RAPPORT AU SOL**

(57) Procédé de mesure radar (RAD) ou sonar de la vitesse par rapport au sol (SL) d'un porteur (PRT) se déplaçant parallèlement au sol, comprenant les étapes suivantes :
a) orienter la ligne de visée du radar ou sonar vers le sol ;
b) émettre une pluralité de signaux ($P_1$ - $P_N$) radar ou sonar dirigés vers le sol, et acquérir des signaux d'écho respectifs ($E_1$ - $E_N$) ;
c) traiter les signaux d'échos acquis de manière à obtenir, pour une ou plusieurs valeurs de retards d'écho, un spectre Doppler correspondant ;
d) pour ladite ou au moins une dite valeur de retard d'écho, déterminer une fréquence haute de coupure du spectre Doppler correspondant ; et
e) calculer la vitesse du porteur par rapport au sol à partir de ladite ou desdites fréquences hautes de coupure.
Système permettant la mise en œuvre d'un tel procédé.

EP 3 671 268 A1

**Description**

L'invention porte sur un procédé et système de mesure radar ou sonar de la vitesse d'un porteur se déplaçant parallèlement au sol. Elle se prête à de nombreuses applications, et notamment à la mesure de vitesse de véhicules terrestres (notamment automobiles) et d'aéronefs avec ou sans pilotes, mais également à la réalisation de « cannes blanches électroniques » pour assister les aveugles et malvoyants dans leurs déplacements.

Dans le cas des véhicules roulants, la vitesse par rapport à la route est généralement déduite d'une mesure de la vitesse de rotation des roues. Cette approche est notoirement imprécise car le diamètre des roues n'est pas toujours connu de manière exacte ; en outre la mesure est faussée en présence de glissements. Elle n'est pas adaptée au cas des véhicules non roulants, tels les aéronefs.

Une autre approche consiste à utiliser les systèmes de positionnement par satellite (GNSS, de l'anglais Global Navigation Satellite System). Son inconvénient est de reposer sur une infrastructure extérieure, qui n'est pas toujours disponible, par exemple en milieu urbain ou en intérieur.

Il est également connu d'effectuer des mesures de vitesse sans contact et sans infrastructure extérieure, au moyen d'un radar. La mesure se base alors généralement sur l'effet Doppler.

Le document FR2741957 décrit un radar permettant d'obtenir simultanément une mesure de distance et de vitesse par rapport au sol. Le radar, de type à impulsion ou à ondes continues modulées en fréquence (FMCW, de l'anglais « Frequency-Modulated Continuous-Wave »), est fixé sur un véhicule à une distance du sol D connue, sa ligne de visée formant avec le sol un angle θ également connu. Une plage de distance correspondant à la distance du radar au sol est choisie. La largeur de cet intervalle est relative à l'ouverture du cône du champ de vision du radar utilisé. Lors d'une mesure de vitesse, si la distance associée n'est pas comprise dans la plage, elle est éliminée. Cette plage de distance est variable en fonction des mesures de vitesse effectuées précédemment. Par exemple, si les mesures précédentes révèlent une accélération du véhicule, la valeur de distance maximale est augmentée afin de prendre en compte le cabrage du véhicule. Cet intervalle permet de n'utiliser que les valeurs de vitesse qui correspondent à l'écho du sol et non pas à d'autres obstacles ayant une vitesse relative différente comme un autre véhicule. Un inconvénient de cette approche est que la vitesse est calculée en fonction de l'angle θ, qui est supposé connu et constant. Une erreur sur la valeur de vitesse est donc présente lorsque l'angle change, ce qui se vérifie en cas d'accélération ou de freinage.

Le document US 5,243,564 permet de corriger les effets du changement d'angle. Ce document exploite le fait qu'il existe une relation entre la décélération du véhicule et son assiette. La mesure de la vitesse par le radar est corrigée au moyen d'un dispositif utilisant la vitesse de rotation des roues par un système d'antiblocage. La détection du freinage entraine une mesure de l'accélération, de la hauteur du radar par rapport au sol, de l'angle d'assiette du véhicule ou d'un quelconque paramètre ayant une influence directe ou indirecte sur la mesure de la vitesse au sol. Si le véhicule n'est pas en train de freiner, la vitesse est calculée en utilisant l'angle au repos. Cette approche ne s'applique qu'au cas d'un véhicule roulant équipé d'un système antiblocage et repose sur des hypothèses fortes concernant la dynamique du véhicule.

L'article de Kleinhempel, W., D. Bergmann, and W. Stammler. "Speed measure of vehicles with on-board Doppler radar", International Conférence on Radar, 1992, enseigne qu'il est possible de s'affranchir de la dépendance de la mesure de vitesse de l'angle entre la ligne de visée et le sol en utilisant deux radars dont les lignes de visée ne sont pas parallèles. Le principal inconvénient de cette approche est son coût, car deux radars sont nécessaires.

L'invention vise à surmonter, en totalité ou en partie, les inconvénients précités de l'art antérieur. Plus particulièrement elle vise à procurer une méthode et un système simple et économique pour mesurer, sans contact, la vitesse d'un porteur par rapport au sol, et cela sans qu'une connaissance préalable de l'assiette du porteur ne soit nécessaire.

Conformément à l'invention, ce but est atteint en exploitant le fait qu'un radar (ou sonar) présente un cône d'émission et réception d'ondes de largeur finie. De ce fait, les échos détectés contiennent assez d'information pour permettre le calcul de l'angle de visée et de la hauteur du porteur par rapport au sol ce qui, à son tour, permet de corriger la mesure de vitesse par effet Doppler. Il n'est donc pas nécessaire d'utiliser un deuxième radar, un système antiblocage ou une centrale inertielle.

Un objet de l'invention est donc un procédé de mesure de la vitesse d'un porteur par rapport au sol, le porteur se déplaçant parallèlement au sol et étant équipé d'un radar ou sonar présentant un cône d'émission et réception autour d'une ligne de visée, le procédé comprenant les étapes suivantes :

a) orienter la ligne de visée du radar ou sonar vers le sol, de préférence obliquement, de telle sorte qu'une empreinte au sol dudit cône d'émission et réception soit traversée par la projection au sol du vecteur vitesse du porteur ;
b) utiliser le radar ou sonar pour émettre une pluralité de signaux dirigés vers le sol, et acquérir des signaux d'écho respectifs ;
c) traiter les signaux d'échos acquis de manière à obtenir, pour une ou plusieurs valeurs de retards d'écho, un spectre Doppler correspondant ;
d) pour ladite ou au moins une dite valeur de retard d'écho, déterminer une fréquence de coupure haute, en valeur absolue, du spectre Doppler correspondant ; et

e) calculer la vitesse du porteur par rapport au sol à partir de sa hauteur par rapport au sol, de ladite ou desdites fréquences de coupure et des valeurs de retard correspondantes.

Un autre objet de l'invention est un système de mesure de la vitesse d'un porteur par rapport au sol au moyen d'un procédé selon l'une des revendications précédentes, comprenant :

- un radar ou sonar présentant un cône d'émission et réception autour d'une ligne de visée pouvant être orientée vers le sol ; et

- un dispositif électronique de traitement de signaux d'écho acquis par ledit radar ou sonar ;

caractérisé en ce que ledit dispositif électronique est configuré pour :

- traiter les signaux d'échos acquis de manière à obtenir, pour une ou plusieurs valeurs de retards d'écho, un spectre Doppler correspondant ;

- pour ladite ou au moins une dite valeur de retard d'écho, déterminer une fréquence de coupure haute, en valeur absolue, du spectre Doppler correspondant ; et

- calculer la vitesse du porteur par rapport au sol à partir d'une donnée indicative de sa hauteur par rapport au sol, de ladite ou desdites fréquences hautes de coupure et des valeurs de retard correspondante.

Des modes de réalisation particuliers font l'objet des revendications dépendantes.

D'autres caractéristiques, détails et avantages de l'invention ressortiront à la lecture de la description faite en référence aux dessins annexés donnés à titre d'exemple et qui représentent, respectivement :

[Fig. 1], représente un schéma de principe d'une mesure de vitesse selon un mode de réalisation de l'invention ;

[Fig. 2], représente une matrice retard/Doppler (ou, de manière équivalente, distance/Doppler) obtenue par un procédé selon un mode de réalisation de l'invention ;

[Fig.3A], représente une vue tridimensionnelle et deux vues bidimensionnelles d'une configuration de mesure de vitesse selon l'invention ;

[Fig. 3B], représente une vue tridimensionnelle et deux vues bidimensionnelles d'une configuration de mesure de vitesse selon l'invention ;

[Fig. 3C], représente une vue tridimensionnelle et deux vues bidimensionnelles d'une configuration de mesure de vitesse selon l'invention ;

[Fig. 3D], représente une vue du même type que celle de la Fig. 3C, mais dans le cas où la projection au sol de la direction de visée du radar ou sonar n'est pas alignée avec la vitesse du porteur ;

[Fig. 4], représente des graphiques illustrant différentes opérations de traitement de données permettant d'extraire une mesure de vitesse d'une matrice retard/Doppler du type illustré sur la Fig. 2 ;

[Fig. 5], représente des graphiques illustrant différentes opérations de traitement de données permettant d'extraire une mesure de vitesse d'une matrice retard/Doppler du type illustré sur la Fig. 2 ;

[Fig. 6], représente des graphiques illustrant différentes opérations de traitement de données permettant d'extraire une mesure de vitesse d'une matrice retard/Doppler du type illustré sur la Fig. 2 ;

[Fig. 7], représente un organigramme d'un algorithme permettant d'extraire une mesure de vitesse d'une matrice retard/Doppler selon un mode de réalisation de l'invention ; et

[Fig. 8], représente une illustration du principe de la mesure - optionnelle - de la hauteur du porteur et de l'angle de visée du radar ou sonar.

On entend par porteur tout corps mobile susceptible de porter un radar ou un sonar ; il peut par exemple s'agir d'un véhicule terrestre, par exemple une voiture, d'un aéromobile ou encore d'un objet non automobile. Le porteur peut être animé par un mouvement de translation horizontale et/ou de rotation autour d'un axe vertical ; c'est par exemple le cas d'une canne blanche électronique, à laquelle l'utilisateur impartit un mouvement en arc de cercle. Dans ce dernier cas, c'est la vitesse de la partie du porteur sur laquelle est monté le radar ou sonar qui est mesurée (par exemple, le bout de la canne blanche).

Dans la suite on considèrera uniquement le cas d'un radar, mais la généralisation à un sonar ne pose pas de difficulté de principe.

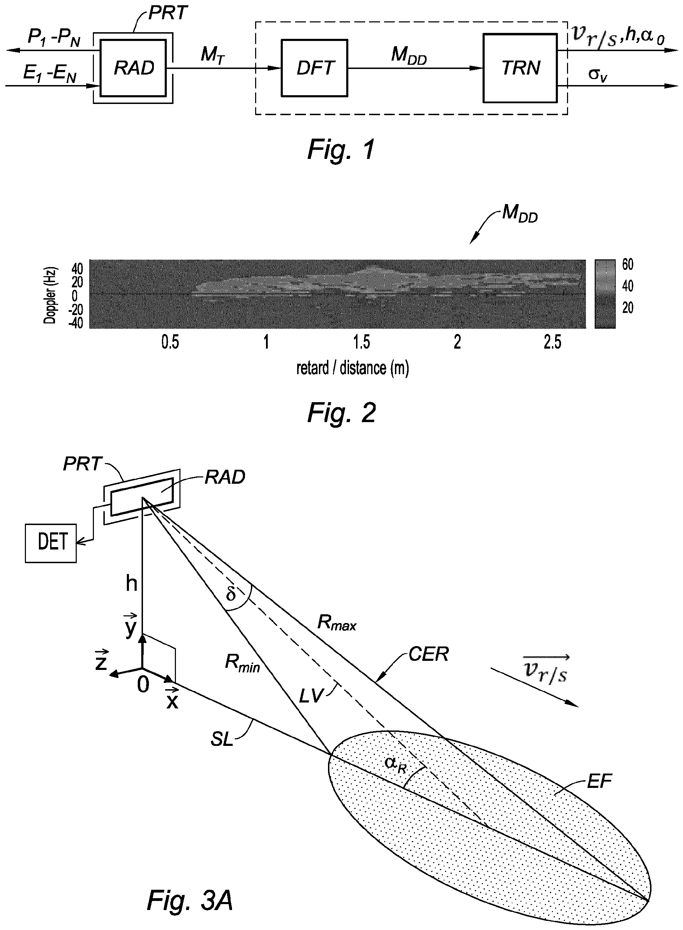

L'invention exploite des mesures de temps de vol et de décalage Doppler pour estimer à la fois la distance du sol et sa vitesse relativement au porteur. Comme illustré sur la Fig. 1 un radar RAD fixé à un porteur PRT émet une succession de N>1 impulsions $P_1$ - $P_N$ en direction du sol, et reçoit des échos correspondants $E_1$ - $E_N$. Chaque écho est échantillonné dans le domaine temporel (M>1 échantillons) et, en général, l'amplitude complexe de chaque échantillon est quantifiée pour permettre un traitement numérique. Le nombre N d'impulsions est généralement compris entre 10 et 100, par exemple on peut avoir N=32 ou N=64. Le choix de N est effectué en fonction de l'application visée, en particulier des variations de vitesse prévisibles du porteur et de la distance maximale attendue des obstacles. Plus grande est cette distance, plus longue doit être la durée d'écoute après émission d'une impulsion, et donc plus faible la cadence d'émission. En outre, la durée d'écoute et le nombre d'impulsions émises et d'échos reçus influencent la précision d'estimation de la vitesse d'un porteur qui ne se déplace pas à vitesse constante. Le nombre M d'échantillons pour chaque écho dépend de la résolution en distance recherchée ; par exemple, pour une distance maximale de 3m, si l'on souhaite obtenir une précision de 1 cm, on doit prendre M$\geq$300.

L'on obtient ainsi une matrice $M_T$ de NxM échantillons dans le domaine temporel ; une dimension de la matrice correspond au « temps lent », échantillonné par la cadence d'émission des impulsions $P_1$ - $P_N$, tandis que l'autre correspond au « temps rapide », quantifié à la fréquence d'échantillonnage des échos. Une transformée de Fourier discrète DFT est ensuite calculée par rapport à la dimension temporelle lente. Le calcul est typiquement effectué au moyen de l'algorithme de transformée de Fourier rapide (FFT). L'on obtient ainsi une deuxième matrice NxM, $M_{DD}$, dite matrice retard/Doppler (Delay/Doppler en anglais). Le nom vient du fait que la dimension correspondant au temps rapide représente le retard T de réception d'un signal d'écho par rapport à l'instant d'émission correspondant, qui est lié à la distance radar/sol D par la relation D=cT/2, c étant la vitesse de propagation du signal (vitesse de la lumière dans le cas d'un radar, vitesse du son dans le cas d'un sonar), tandis que la dimension le long de laquelle la transformée de Fourier a été calculée correspond au décalage Doppler, qui porte l'information de vitesse. En variante, on peut considérer une matrice distance/Doppler (range/Doppler en anglais).

Le cas d'un radar impulsionnel est le plus facile à comprendre, toutefois une matrice retard/Doppler peut également être obtenue à partir d'autres types de radars, par exemple ceux à onde continue modulée en fréquence (FMCW) et ceux utilisant une compression d'impulsions. Ces radars conviennent également à la mise en œuvre de l'invention.

Un exemple de matrice $M_{DD}$ est illustré sur la Fig. 2, où chaque nuance de gris correspond à une valeur de la puissance du signal reçu dans une case retard/Doppler. En fait, dans la Fig. 2 l'axe horizontal représente la distance du sol, et non le retard, mais cela n'a pas d'importance car ces deux grandeurs sont reliées entre elles par une constante de proportionnalité.

Un traitement numérique de la matrice $M_{DD}$ permet d'obtenir la vitesse $v_{r/s}$ du radar/sonar par rapport au sol, mais également sa hauteur h et l'angle $\alpha_0$ formé par le sol (supposé plat) et la direction de pointage du radar. En variante, les paramètres h et $\alpha_0$ peuvent être connus, ce qui permet d'utiliser un traitement simplifié pour déterminer $v_{r/s}$.

Les traitements numériques sont effectués par un dispositif électronique de traitement de signaux, qui peut par exemple être ou comprendre un processeur, par exemple de type DSP (processeur numérique de signaux) programmé de manière opportune et/ou un circuit dédié. Le dispositif est représenté par la référence DET sur les Fig. 1 et Fig. 3A. Typiquement, le dispositif DET est embarqué sur le porteur, mais il est également possible de transmettre les mesures du radar ou sonar à un dispositif de traitement distant.

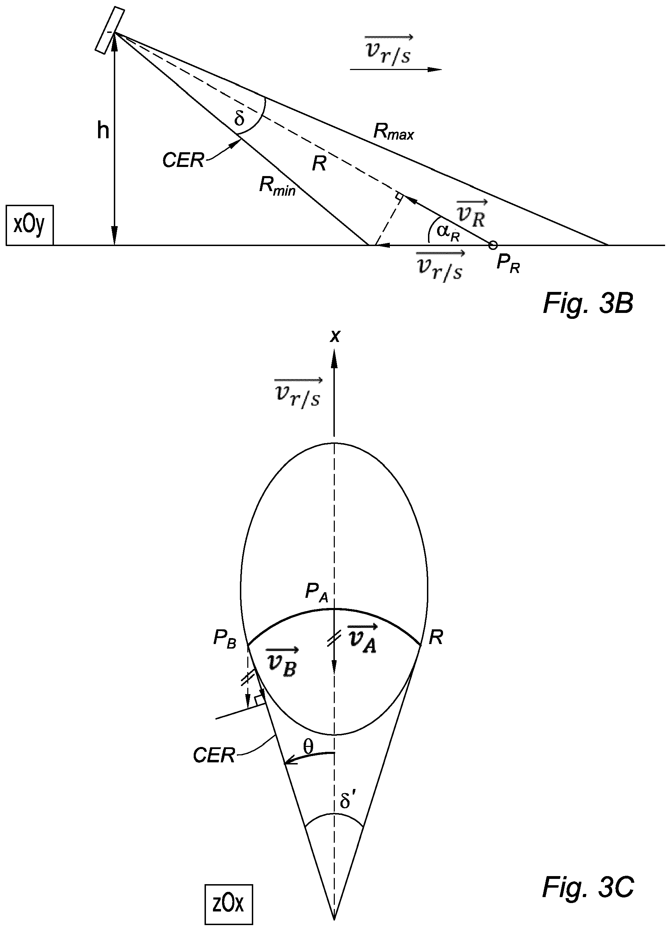

Les Fig. 3A, Fig. 3B et Fig. 3C illustrent la configuration géométrique utilisée pour effectuer une mesure de vitesse $v_{r/s}$ conformément à l'invention. Le radar RAD se trouve à une hauteur h par rapport au sol SL, considéré plat, et se déplace à une vitesse $v_{r/s}$ parallèlement à ce dernier. Un repère cartésien est défini, avec son origine O au niveau du sol et à la verticale du radar ; l'axe y correspond à l'axe vertical, par conséquent le sol coïncide avec le plan xOz, la vitesse $v_{s/r}$ étant orientée selon le sens positif de l'axe z. La ligne de visée LV du radar gît dans le plan xOy et forme avec le sol (et donc avec l'axe x) un angle $\alpha_0$ différent de 0° et de 90° et de préférence compris entre 20° et 70°. Plus la distance de mesure maximale est grande, plus l'angle $\alpha_0$ peut être petit.

Le radar RAD émet les impulsions $P_i$ dans un cône d'émission et réception CER centré autour de la ligne de visée AV et présentant un angle d'ouverture $\delta$ dans le plan xOy (perpendiculaire au sol) et $\delta$' dans le plan zOx (perpendiculaire au sol). L'empreinte au sol du faisceau EF a donc une forme elliptique. L'invention tient compte du fait que l'ouverture angulaire du faisceau n'est généralement pas négligeable - elle peut par exemple être comprise entre 10° et 80° et de préférence entre 40° et 60°, voire entre 40° et 80°. En fait, comme cela apparaitra clairement dans la suite, le fait d'avoir une ouverture angulaire dans le plan xOy non négligeable constitue un avantage. D'autre part, un angle d'ouverture trop large - par exemple $\delta$ et/ou $\delta'$ > 80° - n'est pas souhaitable car les lobes secondaires du diagramme de rayonnement viendraient alors perturber la mesure.

Dans l'exemple des figures 3A - 3C, l'empreinte EF ne s'étend pas jusqu'à la verticale du radar (point O). En d'autres termes, le demi-angle d'ouverture dans le plan xOy, $\delta/2$, est inférieur à $\alpha_0$. Cela est préféré, mais pas essentiel : si le point O est compris dans l'empreinte au sol du faisceau, l'écho correspondant aura un décalage Doppler nul et il faudra l'ignorer lors du calcul de la vitesse (les équations 6 et 7 ci-après prennent une valeur indéterminée « 0/0 » pour un tel écho). Il en resulte une complexité additionnelle du traitement, pour exclure ces contributions problématiques, et une dégradation de l'écart signal à bruit (car une fraction du signal d'écho n'est pas utilisable).

A la limite, l'angle d'inclinaison $\alpha_0$ pourrait être égal à 90°, la ligne de visée étant perpendiculaire au sol ; cependant, pour les raisons expliquées ci-dessus, l'utilisation d'un faisceau dirigé obliquement vers le sol est nettement préférée.

On peut voir que différents points de l'empreinte EF se trouvent à des distances différentes du radar RAD, considéré ponctuel ; on désigne par $R_{min}$ et $R_{max}$ les valeurs extrêmes prises par ces distances. Le lieu géométrique des points de l'empreinte EF à une même distance du radar est un arc de cercle (visible sur la Fig. 3C). Les composantes des signaux d'écho $E_i$ ($i \in \{1,2,...,N\}$) émis par des points à une distance différente arrivent au radar à des instants différents, ce qui résulte en un étalement temporel des échos.

De même, la composante radiale $v_R$ de la vitesse $v_{r/s}$ - et donc le décalage Doppler - n'est pas la même pour tous les points de l'empreinte.

Si l'on se positionne dans le plan xOy, la Fig. 3B permet de constater que la vitesse radiale $v_R$ d'un point $P_R$ quelconque de l'empreinte est la projection de la vitesse $v_{s/r}$ sur le rayon R - de longueur comprise entre $R_{min}$ et $R_{max}$- reliant ce point au radar. Si l'on se limite à considérer les points situés sur l'axe x, on trouve que

[Math. 3]

$$v_R = v_{s/r}\cos(\alpha_R)$$

où

[Math. 4]

$$\alpha_R \in \left[\alpha_0 - \frac{\delta}{2}; \ \alpha_0 + \frac{\delta}{2}\right]$$

est l'angle formé par le rayon R et l'axe x. En outre

[Math. 5]

$$\alpha_R = \sin^{-1}\left(\frac{h}{R}\right) = \sin^{-1}\left(\frac{2h}{c \cdot T_R}\right)$$

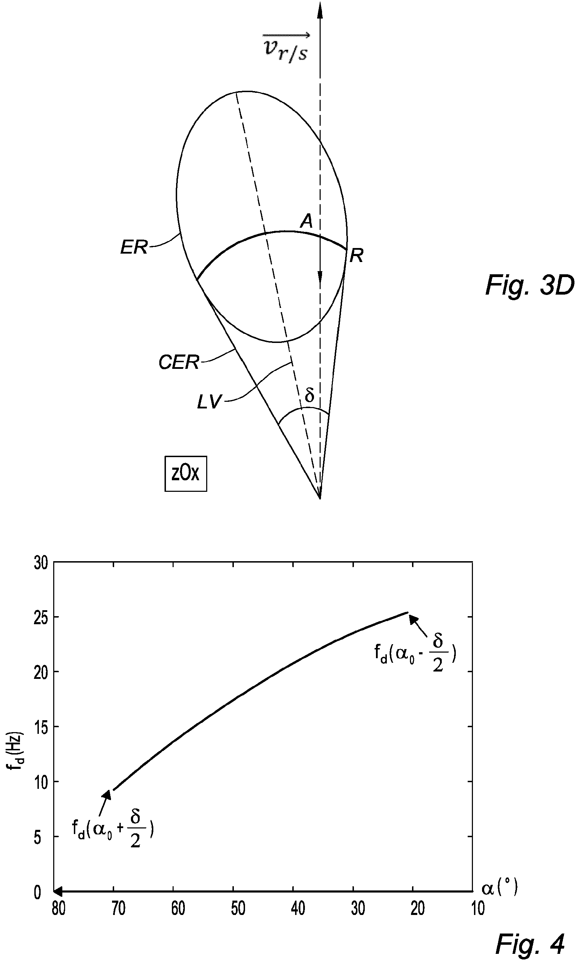

où $T_R$ est le retard des échos provenant d'un point à la distance R du radar. On peut donc tracer une courbe qui, pour les points situés sur l'axe x, exprime la relation entre la fréquence Doppler et le retard. Cette courbe est illustrée sur la Fig. 4 et permet de comprendre l'étalement du spectre de la Fig. 2 dans la direction « retard ».

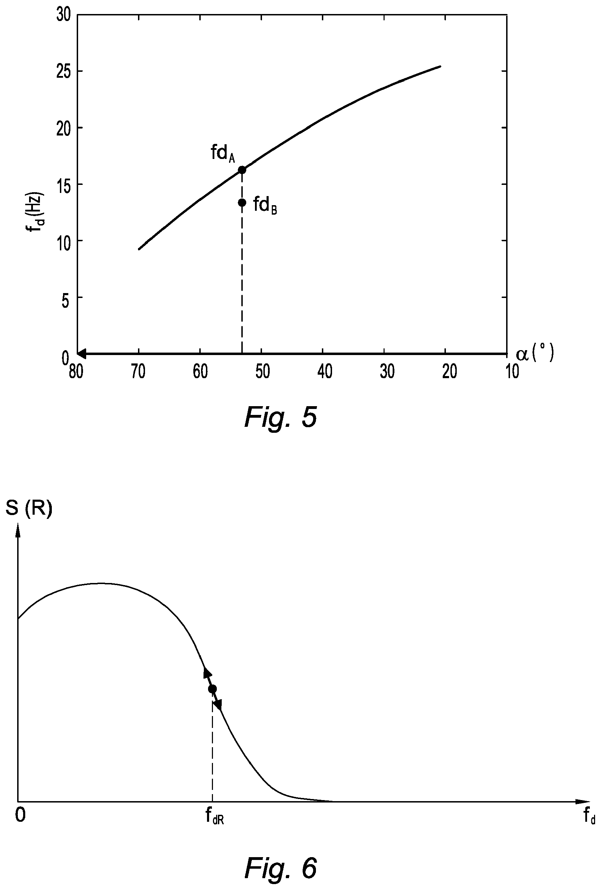

Si on se positionne dans le plan zOx, la Fig. 3C permet de constater que, pour une même distance radiale R, la vitesse perçue au point $P_B$ sera inférieure à la vitesse perçue au point $P_A$ : $v_B = v_A \cos(\delta'/2)$. Plus généralement, la vitesse radiale perçue à un point $P_{R\theta}$ situé à la distance radiale R du radar et telle que la ligne qui le relie à l'origine O forme avec l'axe x un angle $\theta \in [-\delta'/2 ; \delta'/2]$ est égale à $v_{R\theta} = v_A \cos(\theta)$. Ainsi, il y a plusieurs fréquences Doppler mesurées pour une distance R donnée, ce qui est illustré sur la Fig. 5 - où $fd_A$ et $fd_B$ représentent les fréquences Doppler des points $P_A$ et $P_B$ - et explique l'étalement du spectre de la Fig. 2 dans la direction « Doppler ».

Jusqu'ici on a considéré le cas où la projection au sol de la ligne de visée a la même direction que la vitesse $v_{r/s}$. Cela n'est cependant pas essentiel ; ce qui compte est que l'angle formé par la projection au sol de l'angle de visée et la vitesse $v_{r/s}$ (et donc l'axe x) soit inférieur à $\delta'/2$, de telle sorte que l'empreinte au sol EF soit traversée par la projection au sol de $v_{r/s}$. Cela est illustré par la Fig. 3D.

Les considérations qui précèdent permettent de comprendre les traitements numériques devant être mis en œuvre pour déterminer la vitesse $v_{r/s}$ à partir d'un spectre retard/Doppler du type illustré sur la Fig. 2.

Premièrement, il est nécessaire d'extraire la fréquence haute de coupure du spectre Doppler $f_{dR}$, c'est-à-dire la fréquence Doppler maximale (ou maximale en valeur absolue, car le faisceau radar peut également être dirigé à l'opposé du vecteur vitesse), correspondant à une ou plusieurs valeurs de distance R (ou, de manière équivalente, de retard $T_R = 2R/c$) ; cela permet d'isoler les contributions aux signaux d'écho provenant des seuls points de l'empreinte au sol EF situés sur l'axe x. Pour ce faire, il est possible de tracer l'amplitude S(R) du signal d'écho reçu avec un retard $T_R$ en fonction de la fréquence Doppler $f_d$ et placer la coupure en correspondance d'un point d'inflexion maximisant la dérivée $dS/df_d$. En variante, tout autre algorithme de détection de contour peut être appliqué ; en effet, déterminer la fréquence haute de coupure du spectre Doppler pour toutes les valeurs de $T_R$ correspond à trouver la partie supérieure du contour de la « tache » d'intensité élevée du spectre retard/Doppler de la Fig. 2.

Si on appelle $f_{DR}$ la fréquence de coupure ainsi déterminée, la vitesse du porteur mesurée pour le retard $T_R$ correspondant à la distance R est donnée par :

[Math. 6]

$$v_{r/s,R} = \frac{c \cdot f_{dR}}{2f_{em} \cdot \cos(\alpha_R)}$$

où $f_{em}$ est la fréquence d'émission des impulsions radar. En tenant compte de (2), l'équation (3) peut également être écrite

[Math. 7]

$$v_{r/s,R} = \frac{c \cdot f_{dR}}{2f_{em} \cdot \sqrt{1 - \left(\frac{h}{R}\right)^2}}$$

Idéalement, l'équation (3) ou (3') devrait fournir le même résultat pour la vitesse $v_{r/s}$ quelle que soit la valeur de distance R choisie. En pratique, ce n'est pas le cas en raison de nombreuses perturbations affectant les signaux d'écho (par exemple, des obstacles présents sur le sol, différents niveaux de réflectivité du sol ou simplement du bruit électronique). Par conséquent, il est avantageux de calculer $v_{r/s,R}$ pour plusieurs valeurs différentes de R et de s'en servir pour calculer une estimation finale de la vitesse $v_{r/s}$ par exemple en prenant une moyenne, ou une moyenne pondérée, des résultats obtenus. Il est également possible de calculer un indice de qualité de l'estimation de la vitesse - il peut s'agir par exemple de l'écart-type $\sigma_v$ de la série d'estimations correspondant à différentes valeurs de R. C'est pour cette raison que le fait d'avoir un cône d'émission et réception ayant une ouverture angulaire non négligeable dans le plan xOy constitue un avantage. L'ouverture angulaire dans le plan zOx, par contre, doit de préférence être minimisée dans la limite des contraintes du matériel utilisé (typiquement, la taille de l'antenne radar).

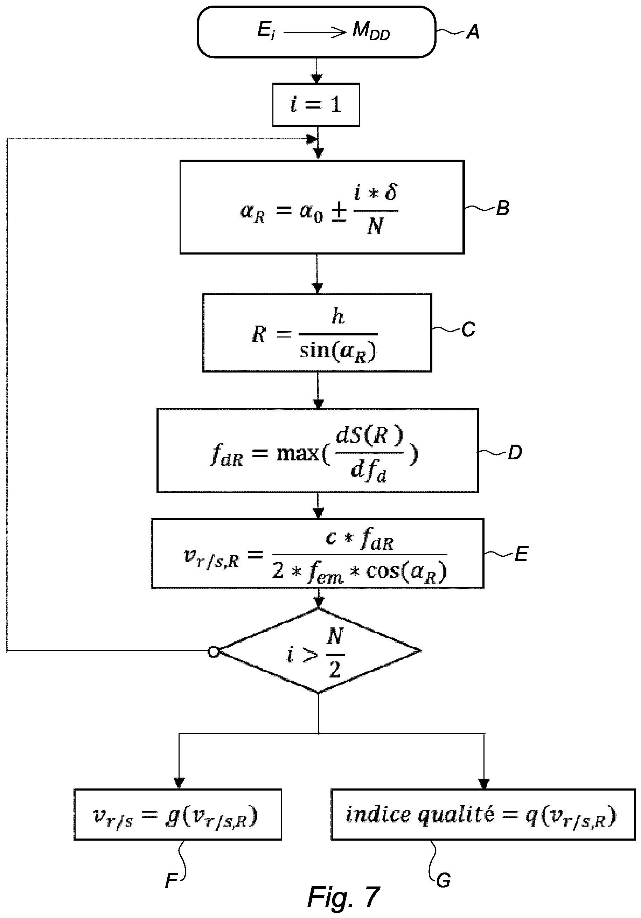

La Fig. 7 illustre un algorithme de mesure de vitesse mettant en œuvre les principes exposés plus haut. Après l'acquisition des signaux d'écho et leur traitement pour obtenir une matrice retard/Doppler (A), l'on détermine N valeurs d'angle $\alpha_R$ échantillonnant la plage $[\alpha_0-\delta'/2 ; \alpha_0+\delta'/2]$ (B) et on calcule les distances correspondantes $R=(h/\sin(\alpha_R))$ (C). Pour chaque valeur de distance la fréquence haute de coupure du spectre Doppler correspondant $f_{DR}$ est calculée en recherchant le maximum de la dérivée $dS/df_d$ (D), puis l'équation (3) ou (3') est utilisée pour calculer $v_{s/r,R}$ (E). Ces opérations sont répétées pour toutes les valeurs d'angle $\alpha_R$. Enfin, la vitesse du porteur $v_{s/r}$ (F) et) et l'indice de qualité de l'estimation (G) sont calculés en fonction (fonctions g(.) et q(.)) des valeurs $v_{s/r,R}$.

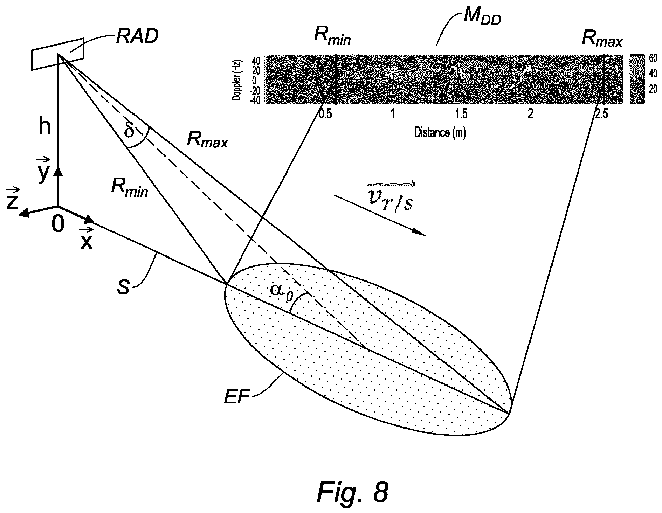

L'application de l'équation (3) ou (3') présuppose que la hauteur h du porteur soit connue, ce qui n'est pas nécessairement le cas. Si cela est nécessaire, toutefois, cette information peut être déduite du spectre retard/Doppler, comme illustré par la Fig. 8.

La distance minimale R$_{min}$ et la distance maximale R$_{max}$ dépendent toutes deux de la hauteur h, supposée inconnue, et de l'angle $\alpha_0$ qui, lui aussi, est généralement inconnu :

$$[Math.8] \quad \begin{cases} R_{min} = \dfrac{h}{\sin\left(\alpha_0 + \dfrac{\delta}{2}\right)} \\[3mm] R_{max} = \dfrac{h}{\sin\left(\alpha_0 - \dfrac{\delta}{2}\right)} \end{cases}$$

Si R$_{min}$ et R$_{max}$ sont connues, h et $\alpha_0$ peuvent être trouvés en résolvant le système (4). Or, R$_{min}$ et R$_{max}$ sont respectivement associées au plus petit et au plus grand retard pour lesquels le signal d'écho est « significatif » (sensiblement supérieur au niveau de bruit). Ces deux valeurs peuvent être trouvées par une méthode de seuillage : On définit tout d'abord la grandeur E(R) qui correspond à l'énergie totale reçue pour une distance donnée et pour des fréquences Doppler positives, E$_s$(R)={||S(R)||², d≥0}. Cette grandeur est comparée à un seuil afin de déterminer l'intervalle de distance [R$_{min}$, R$_{max}$] dans lequel l'énergie reçue est significative. Il est également possible d'utiliser d'autres méthodes, par exemple une détection de contour.

## Revendications

1. Procédé de mesure de la vitesse d'un porteur (PRT) par rapport au sol (SL), le porteur se déplaçant parallèlement au sol et étant équipé d'un radar ou sonar (RAD) présentant un cône d'émission et réception (CER) autour d'une ligne de visée (LV), le procédé comprenant les étapes suivantes :

   a) orienter la ligne de visée du radar ou sonar vers le sol, de telle sorte qu'une empreinte au sol (EF) dudit cône d'émission et réception soit traversée par la projection au sol du vecteur vitesse (v$_{r/s}$) du porteur ;
   b) utiliser le radar ou sonar pour émettre une pluralité de signaux (P$_1$ - P$_N$) dirigés vers le sol, et acquérir des signaux d'écho respectifs (E$_1$ - E$_N$) ;
   c) traiter les signaux d'échos acquis de manière à obtenir, pour une ou plusieurs valeurs de retards d'écho, un spectre Doppler correspondant (S(R)) ;
   d) pour ladite ou au moins une dite valeur de retard d'écho, déterminer une fréquence de coupure (f$_{dR}$) haute, en valeur absolue, du spectre Doppler correspondant ; et
   e) calculer la vitesse du porteur par rapport au sol à partir de sa hauteur par rapport au sol, de ladite ou desdites fréquences hautes de coupure et des valeurs de retard correspondantes.

2. Procédé selon la revendication 1 dans lequel :

   - l'étape c) comporte le traitement des signaux d'échos acquis de manière à obtenir un dit spectre Doppler pour chacune d'une pluralité de valeurs de retard ;
   - l'étape d) comporte la détermination d'une pluralité de dites fréquences hautes de coupure pour une pluralité desdits spectres Doppler ; et
   - l'étape e) comporte le calcul de la vitesse du porteur par rapport au sol à partir de sa hauteur par rapport au sol, d'une pluralité desdites fréquences hautes de coupure.

3. Procédé selon la revendication 2 dans lequel l'étape e) comporte également le calcul d'un indice de confiance de la mesure de vitesse ($\sigma_v$) à partir d'une pluralité desdites fréquences hautes de coupure.

4. Procédé selon l'une des revendications 2 ou 3 dans lequel l'étape c) comporte la construction d'une matrice retard - Doppler (M$_{DD}$) et l'étape d) est mise en œuvre par application d'un algorithme de détection de contour à ladite matrice.

5. Procédé selon l'une des revendications précédentes dans lequel, lors de l'étape d), ladite ou chaque fréquence haute de coupure est déterminée en identifiant un maximum de la dérivée du spectre Doppler correspondant par rapport à la fréquence.

6. Procédé selon l'une des revendications précédentes dans lequel l'étape e) comporte, pour ladite ou chaque dite valeur de retard, désignée par $T_R$, le calcul d'une vitesse $v_{r/s,R}$ donnée par :

$$v_{r/s,R}=(c \cdot f_{DR})/(2f_{em} \cdot \cos(\alpha_R))$$

où :

- c est la vitesse de propagation du signal émis par le radar ou sonar ;
- $f_{DR}$ est la fréquence haute de coupure du spectre Doppler correspondant au retard $T_R$ ;
- $f_{em}$ est la fréquence du signal émis par le radar ou sonar ;
- $\alpha_R = \sin^{-1}(2h/c \cdot T_R)$, h étant la hauteur du porteur par rapport au sol ;

et dans lequel ladite vitesse du porteur par rapport au sol est déterminée en fonction d'une ou plusieurs des vitesses $v_{r/s,R}$ ainsi calculées.

7. Procédé selon l'une des revendications précédentes dans lequel le cône d'émission et réception a un angle d'ouverture $\delta$ dans un plan perpendiculaire au sol et contenant la ligne de visée compris entre 40° et 80°.

8. Procédé selon l'une des revendications précédentes comprenant également une étape d') consistant à traiter les signaux d'échos acquis de manière à déterminer une valeur maximale et minimale du retard desdits signaux d'échos, et à en déduire une estimation de la hauteur h du porteur par rapport au sol et de l'angle formé par la ligne de visée et le sol.

9. Procédé selon l'une des revendications précédentes dans lequel, lors de l'étape a), le faisceau est dirigé obliquement vers le sol.

10. Système de mesure de la vitesse d'un porteur par rapport au sol au moyen d'un procédé selon l'une des revendications précédentes, comprenant :

- un radar ou sonar (RAD) présentant un cône d'émission et réception autour d'une ligne de visée pouvant être orientée vers le sol; et
- un dispositif électronique de traitement (DET) de signaux d'écho acquis par ledit radar ou sonar ;

**caractérisé en ce que** ledit dispositif électronique est configuré pour :

- traiter les signaux d'échos acquis de manière à obtenir, pour une ou plusieurs valeurs de retards d'écho, un spectre Doppler correspondant ;
- pour ladite ou au moins une dite valeur de retard d'écho, déterminer une fréquence de coupure haute, en valeur absolue, du spectre Doppler correspondant ; et
- calculer la vitesse du porteur par rapport au sol à partir d'une donnée indicative de sa hauteur par rapport au sol, de ladite ou desdites fréquences hautes de coupure et des valeurs de retard correspondant.

Fig. 1

Fig. 2

Fig. 3A

Fig. 3B

Fig. 3C

$$\overrightarrow{v_{r/s}}$$

*A*

*ER*

*R*

*CER*

*LV*

$\delta$

zOx

*Fig. 3D*

$$f_d\left(\alpha_0 - \frac{\delta}{2}\right)$$

$$f_d\left(\alpha_0 + \frac{\delta}{2}\right)$$

$\alpha\,(°)$

$f_d\,(Hz)$

*Fig. 4*

*Fig. 5*

*Fig. 6*

$$E_i \longrightarrow M_{DD} \qquad A$$

$$i = 1$$

$$\alpha_R = \alpha_0 \pm \frac{i * \delta}{N} \qquad B$$

$$R = \frac{h}{\sin(\alpha_R)} \qquad C$$

$$f_{dR} = \max\left(\frac{dS(R)}{df_d}\right) \qquad D$$

$$v_{r/s,R} = \frac{c * f_{dR}}{2 * f_{em} * \cos(\alpha_R)} \qquad E$$

$$i > \frac{N}{2}$$

$$v_{r/s} = g(v_{r/s,R}) \qquad F$$

$$indice\ qualité = q(v_{r/s,R}) \qquad G$$

*Fig. 7*

Fig. 8

**Europäisches Patentamt**
**European Patent Office**
**Office européen des brevets**

# RAPPORT DE RECHERCHE EUROPEENNE

Numéro de la demande

EP 19 21 6584

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y<br>A | EP 3 054 316 A1 (HONEYWELL INT INC [US]) 10 août 2016 (2016-08-10)<br>* colonne 2, ligne 10 - colonne 3, ligne 33 *<br>* colonne 11, ligne 39 - colonne 12, ligne 1 *<br>* colonne 13, ligne 2 - colonne 14, ligne 44 *<br>* colonne 15, ligne 29 - colonne 16, ligne 32 *<br>* figures 1-6 *<br>----- | 1-4,6,8,10<br>7,9<br>5 | INV.<br>G01S13/60<br>G01S15/60<br>G01S7/288<br>G01S7/292<br>G01S7/35<br>G01S7/527<br>G01S7/536<br>G01S13/10<br>G01S13/34<br>G01S13/58<br>G01S15/10 |
| Y<br>A | EP 1 739 451 A1 (SIEMENS AG [DE]) 3 janvier 2007 (2007-01-03)<br>* page 2, ligne 58 - page 3, ligne 13 *<br>* figures 1, 3, 4 *<br>----- | 7,9<br>1-6,8,10 | G01S15/34<br>G01S15/58<br>G01S13/92<br>G01S15/88<br><br>ADD. |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 30 avril 2020 | Köppe, Maro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 19 21 6584

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| | | | G01S13/931 |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 30 avril 2020 | Köppe, Maro |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ..........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 21 6584

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-04-2020

| Document brevet cité au rapport de recherche | | Date de publication | Membre(s) de la famille de brevet(s) | | Date de publication |
|---|---|---|---|---|---|
| EP 3054316 | A1 | 10-08-2016 | EP | 3054316 A1 | 10-08-2016 |
| | | | US | 2016223665 A1 | 04-08-2016 |
| EP 1739451 | A1 | 03-01-2007 | AT | 464576 T | 15-04-2010 |
| | | | CN | 1885062 A | 27-12-2006 |
| | | | DE | 102005030295 A1 | 28-12-2006 |
| | | | EP | 1739451 A1 | 03-01-2007 |
| | | | ES | 2343428 T3 | 30-07-2010 |
| | | | HK | 1095885 A1 | 02-03-2012 |

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2741957

- US 5243564 A

**Littérature non-brevet citée dans la description**

- **KLEINHEMPEL, W. ; D. BERGMANN ; W. STAMMLER.** Speed measure of vehicles with on-board Doppler radar. *International Conférence on Radar,* 1992